(19) Europäisches Patentamt
European Patent Office
Office européen des brevets

(11) **EP 3 218 812 B1**

(12) **EUROPÄISCHE PATENTSCHRIFT**

(45) Veröffentlichungstag und Bekanntmachung des Hinweises auf die Patenterteilung:
**22.07.2020 Patentblatt 2020/30**

(21) Anmeldenummer: **15771552.5**

(22) Anmeldetag: **21.09.2015**

(51) Int Cl.:
*G06F 13/16* (2006.01)     *G06F 9/4401* (2018.01)

(86) Internationale Anmeldenummer:
**PCT/EP2015/071569**

(87) Internationale Veröffentlichungsnummer:
**WO 2016/074837 (19.05.2016 Gazette 2016/20)**

(54) **VERFAHREN UND SPEICHERVERWALTUNGSVORRICHTUNG ZUM ÜBERTRAGEN VON DATEN INNERHALB EINES COMPUTER-SYSTEMS, SPEICHERSYSTEM UND COMPUTER-SYSTEM**

METHOD AND STORAGE MANAGEMENT DEVICE FOR TRANSMITTING DATA WITHIN A COMPUTER SYSTEM, STORAGE SYSTEM AND COMPUTER SYSTEM

PROCÉDÉ ET DISPOSITIF DE GESTION DE MÉMOIRE POUR LA TRANSMISSION DE DONNÉES À L'INTÉRIEUR D'UN SYSTÈME INFORMATIQUE, SYSTÈME DE MÉMOIRE ET SYSTÈME INFORMATIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **12.11.2014 DE 102014223035**

(43) Veröffentlichungstag der Anmeldung:
**20.09.2017 Patentblatt 2017/38**

(73) Patentinhaber: **Robert Bosch GmbH**
**70442 Stuttgart (DE)**

(72) Erfinder: **ENGEL, Gerhard**
**31180 Giesen (DE)**

(56) Entgegenhaltungen:
**WO-A1-2009/074499     DE-A1-102004 013 639**
**DE-A1-102013 206 751     US-B1- 6 513 094**

EP 3 218 812 B1

**Beschreibung**

Stand der Technik

Die vorliegende Erfindung bezieht sich auf ein Verfahren zum Übertragen von Daten innerhalb eines Computer-Systems für ein Fahrzeug, auf eine entsprechende Speicherverwaltungsvorrichtung, ein entsprechendes Speichersystem, ein entsprechendes Computer-System für ein Fahrzeug sowie auf ein entsprechendes Computerprogramm.

Die US 6 513 094 B1 offenbart ein prozessorbasiertes Geräts mit einem Datenbus, der von einem nicht-flüchtigen Speicher und einem flüchtigen Speicher gemeinsam genutzt wird. Das Gerät stellt spezielle Signale bereit, um die gemeinsame Nutzung des Datenbus zu ermöglichen.

Die DE 102004013 639 A1 offenbart eine Vorrichtung zum schnellen Hochfahren eines Computers. Die Vorrichtung weist eine Speicher-Zugriffseinheit zum Speichern einer Boot-Information, einen Hauptspeicher und zumindest eine CPU und eine BIOS-Einheit zum Einstellen der Speicher-Zugriffseinheit als Boot-Gerät des Computers auf. Wenn der Computer hochfährt, liest die CPU die Boot-Information und speichert die Boot-Information im Hauptspeicher.

Heutige Computer-Systeme arbeiten grundsätzlich mit zwei Typen von Speicher: Schnelle flüchtige Speicher (RAM) und verschiedenartige nichtflüchtige Speicher (ROM, Flash, Disk). Dabei werden im Bereich der mobilen Systeme, zu denen auch Smartphones und Tablets, aber insbesondere auch Infotainment-Systeme im Fahrzeug beziehungsweise Kraftfahrzeug zählen, überwiegend Flash-Speicher als Permanentspeicher verwendet. Aus historischen Gründen werden diese an verschiedenen Schnittstellen betrieben.

Die Zuordnung der beiden Speichertypen zu ihrer Verwendung ist ihren Eigenschaften geschuldet. Die nicht-flüchtigen Speicher beinhalten zunächst den Programm-Code, den jeder Computer grundsätzlich braucht, um zumindest eigenständig seine Arbeit zu beginnen. Dieser Speichertyp ist nach heutigem Stand der Technik zu langsam, um für den beliebigen Zugriff auf Daten die gewünschten Geschwindigkeiten zu erreichen. Die flüchtigen Speichertypen sind um Größenordnungen schneller (insbesondere beim Schreiben) und werden deshalb während des Normalbetriebs vorzugsweise benutzt. Dies gilt heute sogar auch für den Programm-Code. Um höhere Arbeitsgeschwindigkeiten zu erreichen, werden vor dem Programmstart Daten aus dem Permanentspeicher (ROM/Flash) in den flüchtigen Arbeitsspeicher (RAM) kopiert und die Programmausführung dann mit dieser Kopie im Arbeitsspeicher gestartet.

Insbesondere mobile Geräte werden für die Zeit der Nicht-Verwendung in einen Ruhezustand versetzt, um Strom zu sparen und die Batterie-Ladung zu erhalten.

Offenbarung der Erfindung

Vor diesem Hintergrund wird mit dem hier vorgestellten Ansatz eine verbesserte Speicherverwaltungsvorrichtung gemäß dem Hauptanspruch vorgestellt. Vorteilhafte Ausgestaltungen ergeben sich aus den jeweiligen Unteransprüchen und der nachfolgenden Beschreibung.

Die Zeit beim Start eines Computer-Systems kann von der Zeit abhängig sein, die benötigt wird, bis ein schneller, flüchtiger Arbeitsspeicher mit entsprechenden Daten bereitsteht. Eine spezielle von einem Mikrocontroller unabhängige Speicherverwaltungsvorrichtung kann ein schnelles Kopieren von Daten zwischen flüchtigem Speicher, nichtflüchtigem Speicher und Mikrocontroller ermöglichen und gleichzeitig den Mikrocontroller für andere Aufgaben freimachen.

Es wird ein Verfahren vorgestellt zum Übertragen von Daten innerhalb eines Computer-Systems zwischen einer Speicherschnittstelle eines flüchtigen Speichers, einer Speicherschnittstelle eines nichtflüchtigen Speichers und einer Schnittstelle eines Mikrocontrollers, wobei das Verfahren die folgenden Schritte aufweist:

Einlesen von Daten von der Speicherschnittstelle des nichtflüchtigen Speichers ansprechend auf eine den Beginn eines Boot-Vorgangs des Mikrocontrollers anzeigenden Information; und
Bereitstellen der eingelesenen Daten an die Speicherschnittstelle des flüchtigen Speichers.

Unter einem Computer-System kann ein PC-System, Tablet-System, Mobile-System oder Embeded-System verstanden werden. Unter einem Embedded-System kann ein eingebettetes System verstanden werden, welches in einen technischen Kontext eingebunden ist. Das Computer-System kann Überwachungs-, Steuerungs- oder Regelfunktionen ausführen oder kann für eine Form der Datenverarbeitung beziehungsweise Signalverarbeitung zuständig sein, beispielsweise beim Verschlüsseln beziehungsweise Entschlüsseln, Codieren beziehungsweise Decodieren oder Filtern. Das Computer-System kann in einem Fahrzeug, beispielsweise in einem Fahrer-Assistenzsystem oder einem Infotainmentsystem, eingesetzt werden. Unter einem flüchtigen Speicher kann ein Speicher verstanden werden, dessen gespeicherte Informationen verloren gehen, wenn sie nicht aufgefrischt werden oder wenn der Strom abgeschaltet wird. Unter einem nichtflüchtigen Speicher kann ein Permanentspeicher (beispielsweise ROM, PROM) oder semipermanenter Speicher wie unter anderen beispielsweise EPROM (erasable programmable read only memory), EEPROM (electrically erasable programmable read only memory), Flash-EEPROM (USB-Stick), FRAM, MRAM oder Phase Change RAM verstanden werden. Der Speicher kann als Speichermodul vorliegen. Vorteilhaft kann ein in dem nichtflüchtigen Speicher abgelegtes Speicherabbild für einen Systemstart oder vor einem Ruhezustand des Computer-Systems schnell in den flüchtigen Speicher übertragen werden und somit das Computer-System schnell betriebsbereit sein, insbesondere schneller, als wenn der Mikrocontroller den Kopiervorgang direkt steuert. Gemäß einer Ausführungsform kann es sich bei der Schnittstelle des Mikrocontrollers um eine Schnittstelle einer optionalen Speicherverwaltungseinheit des Mikrocontrollers handeln. Im Schritt des Bereitstellens können die eingelesenen Daten ferner an die Schnittstelle des Mikrocontrollers bereitgestellt werden.

Gemäß einer Ausführungsform kann die Information eine über die Schnittstelle zu dem Mikrocontroller empfangene Information repräsentieren. Somit kann die Information in Form eines Kommandos auf dem Speicherbus realisiert sein. Dies kann z.B. zukünftig in den JEDEC Standard einfließen. Alternativ kann die Information ein Signal darstellen, dass über eine zusätzliche Leitung übertragen werden kann.

Im Schritt des Einlesens können ansprechend auf das Information, Daten von der Speicherschnittstelle des flüchtigen Speichers und ergänzend oder alternativ von der Schnittstelle des Mikrocontrollers eingelesen werden. So können Daten vom flüchtigen Speicher zum Mikrocontroller und umgekehrt übertragen werden.

Dabei können die Daten ein vollständiges Arbeitsspeicherabbild des Mikrocontrollers darstellen. Auf diese Weise kann das vollständige Arbeitsspeicherabbild schnellstmöglich in einen permanenten Speicher kopiert werden. Gemäß unterschiedlicher Ausführungsformen können die Daten auch nur einen oder mehre Abschnitt des vollständigen Arbeitsspeicherabbilds darstellen.

Im Schritt des Bereitstellens können die eingelesenen Daten an der Speicherschnittstelle des nichtflüchtigen Speichers bereitgestellt werden. So kann ein Speicherabbild des flüchtigen Speichers im nichtflüchtigen Speicher abgelegt werden. Auch können zu archivierende Daten, die vom Mikrocontroller bereitgestellt werden, direkt im nichtflüchtigen Speicher abgelegt werden. Ein in dem flüchtigen Speicher gespeichertes Speicherabbild und ergänzend oder alternativ ein Teil eines in dem flüchtigen Speicher gespeicherten Speicherabbilds kann als eingelesene Daten an der Speicherschnittstelle des nichtflüchtigen Speichers und ergänzend oder alternativ der Schnittstelle des Mikrocontrollers bereitgestellt werden. Im flüchtigen Speicher hinterlegte Information, das heißt Daten, kann sowohl an den Mikrocontroller als auch zum nichtflüchtigen Speicher übertragen werden.

Ferner kann das Verfahren einen Schritt des Bereitstellens eines Statussignals umfassen, wobei im Schritt des Bereitstellens das Statussignal an den Mikrocontroller nach Abschluss des Schritts des Bereitstellens und/oder eines Schreibens der Daten in den flüchtigen Speicher und/oder nichtflüchtigen Speicher bereitgestellt wird, um eine abgeschlossene Datenübertragung zu signalisieren. So kann der Mikrocontroller eine Information über die Verwendbarkeit des flüchtigen Speichers erhalten.

Das Verfahren kann einen Schritt des Komprimierens oder Dekomprimierens der im Schritt des Einlesens eingelesenen Daten aufweisen. Ein solcher Schritt kann zwischen dem Schritt des Einlesens und dem Schritt des Bereitstellens ausgeführt wird. Dabei können die im Schritt des Einlesens eingelesenen Daten komprimiert oder dekomprimiert werden. Ferner können im Schritt des Bereitstellens die komprimierten Daten und ergänzend oder alternativ dekomprimierten Daten bereitgestellt werden. So kann eine Größe des erforderlichen Speichers reduziert werden. Ferner kann eine Übertragungszeit verkürzt werden.

Eine Busbreite der Speicherschnittstelle des nichtflüchtigen Speichers, der Speicherschnittstelle des flüchtigen Speichers oder der Schnittstelle des Mikrocontrollers kann sich unterscheiden. Insbesondere kann dabei die Speicherschnittstelle des nichtflüchtigen Speichers ausgebildet sein, den nichtflüchtigen Speicher über eine 8-Bit und/oder 16-Bit breite Busschnittstelle und/oder eine Mehrzahl nichtflüchtiger Speicher parallel über eine Mehrzahl von 8-Bit und/oder 16-Bit breiten Busschnittstellen anzubinden. Insbesondere kann dabei die Speicherschnittstelle des flüchtigen Speichers ausgebildet sein, den flüchtigen Speicher über eine 16-Bit und/oder 32-Bit breite Busschnittstelle und/oder eine Mehrzahl nichtflüchtiger Speicher parallel über eine Mehrzahl von 16-Bit und/oder 32-Bit breiten Busschnittstellen anzubinden. Die Schnittstelle des Mikrocontrollers kann ferner ausgebildet sein, den Mikrocontroller über eine 32-Bit und/oder 64-Bit breite Busschnittstelle anzubinden.

Der Mikrocontroller kann im Schritt des Einlesens und ergänzend oder alternativ im Schritt des Bereitstellens über ein DDR-Protokoll und ergänzend oder alternativ eine Variante eines DDR-Protokolls angesprochen werden. Unter einem DDR-Protokoll kann ein DDR-Speicherprotokoll, ein Kommunikationsprotokoll oder Datenprotokoll zum Ansteuern eines DDR-SDRAM oder einer Variante hiervon verstanden werden.

Der flüchtige Speicher kann als ein DDR3-Speicher oder DDR4-Speicher oder eine andersartige Form eines Speichers nach dem DDR-Protokoll ausgeführt sein. Der nichtflüchtige Speicher kann als ein PCM-Speicher, ein paralleler SLC-Nand-Flash-Speicher, ein MLC-Nand-Speicher, ein NOR-Flash, ein eMMC-Speicher, ein ROM oder eine Festplatte ausgeführt sein. Ferner kann der Mikrocontroller als ein diskretes Bauteil ausgeführt sein.

Es wird ein Verfahren zum Betreiben eines Computer-Systems vorgestellt. Das Computer-System umfasst zumindest ein Speichersystem und einen Mikrocontroller und einen nichtflüchtigen Boot-Speicher, wobei das Speichersystem einen flüchtigen Speicher und einen nichtflüchtigen Speicher und eine Speicherverwaltungsvorrichtung aufweist, wobei eine erste Schnittstelle der Speicherverwaltungsvorrichtung mit einer Speicherschnittstelle des nichtflüchtigen Speichers verbunden ist und eine zweite Schnittstelle der Speicherverwaltungsvorrichtung mit einer Speicherschnittstelle des flüchtigen Speichers verbunden ist und eine dritte Schnittstelle des Speichersystems mit einer Schnittstelle des Mikrocontrollers verbunden ist, wobei der Mikrocontroller über eine weitere Schnittstelle mit einer Schnittstelle des Boot-Speichers verbunden ist, wobei das Verfahren die folgenden Schritte aufweist:

Einlesen einer Start-Sequenz von der Schnittstelle des Boot-Speichers;

Initialisieren von Einrichtungen und/oder Schnittstellen des Computer-Systems unter Verwendung der Start-Sequenz; und

Bereitstellen der Information, um die Schritte einer Variante eines hier vorgestellten Verfahrens zum Übertragen von Daten innerhalb eines Computer-Systems zeitlich parallel zum Schritt des Initialisierens des Computer-Systems auszuführen.

Auf diese Weise kann der Boot-Vorgang des Mikrocontrollers verkürzt werden, da die Initialisierung des flüchtigen Speichers zeitlich parallel zu der Initialisierung des Mikrocontrollers ausgeführt werden kann.

Es wird eine Speicherverwaltungsvorrichtung vorgestellt zum Übertragen von Daten innerhalb eines Computer-Systems zwischen einer Speicherschnittstelle eines flüchtigen Speichers, einer Speicherschnittstelle eines nichtflüchtigen Speichers und einer Schnittstelle eines Mikrocontrollers. So schafft der hier vorgestellte Ansatz ferner eine Speicherverwaltungsvorrichtung, die ausgebildet ist, um die Schritte einer Variante eines hier vorgestellten Verfahrens in entsprechenden Einrichtungen durchzuführen, anzusteuern beziehungsweise umzusetzen. Die Speicherverwaltungsvorrichtung kann als ein diskretes Bauteil ausgebildet sein oder zusammen mit zumindest einer der genannten Einheiten zusammengefasst sein. Auch durch diese Ausführungsvariante der Erfindung in Form einer Speicherverwaltungsvorrichtung kann die der Erfindung zugrunde liegende Aufgabe schnell und effizient gelöst werden. Die Speicherverwaltungsvorrichtung kann auch als Startbeschleuniger für ein Computer-System bezeichnet werden.

Unter einer Speicherverwaltungsvorrichtung kann vorliegend ein elektrisches Gerät verstanden werden, das Sensorsignale verarbeitet und in Abhängigkeit davon Steuer- und/oder Datensignale ausgibt. Die Speicherverwaltungsvorrichtung kann eine Schnittstelle aufweisen, die hard-und/oder softwaremäßig ausgebildet sein kann. Bei einer hardwaremäßigen Ausbildung können die Schnittstellen beispielsweise Teil eines sogenannten System-ASICs sein, der verschiedenste Funktionen der Speicherverwaltungsvorrichtung beinhaltet. Es ist jedoch auch möglich, dass die Schnittstellen eigene, integrierte Schaltkreise sind oder zumindest teilweise aus diskreten Bauelementen bestehen. Bei einer softwaremäßigen Ausbildung können die Schnittstellen Softwaremodule sein, die beispielsweise auf einem Mikrocontroller neben anderen Softwaremodulen vorhanden sind.

Gemäß einer Ausführungsform können flüchtiger und nichtflüchtiger Speicher durch ein "intelligentes" Funktionselement in Form der Speicherverwaltungsvorrichtung mit einem Hochgeschwindigkeitsbus verbunden sein. Das Funktionselement kann dabei das Management des Datentransfers zwischen den beiden Speichern und dem Prozessor, beispielsweise in Form des Mikrocontrollers übernehmen, der ebenfalls an diesem Hochgeschwindigkeitsbus hängt. Der Prozessor hat auf diese Weise mehr ungenutzte Pins und erhält seine (Start-)Daten schneller. Gemäß einer Ausführungsform hängen die Eingänge und Ausgänge der genannten Speicher dabei alle am gleichen Bus.

Es wird ferner ein Speichersystem mit einem flüchtigen Speicher und einem nichtflüchtigen Speicher sowie einer Variante einer hier vorgestellten Speicherverwaltungsvorrichtung vorgestellt. Der flüchtige Speicher, der nichtflüchtige Speicher und die Speicherverwaltungsvorrichtung sind dabei auf einem gemeinsamen Träger angeordnet. Eine erste Schnittstelle der Speicherverwaltungsvorrichtung ist mit der Speicherschnittstelle des nichtflüchtigen Speichers und eine zweite Schnittstelle der Speicherverwaltungsvorrichtung ist mit der Speicherschnittstelle des flüchtigen Speichers verbunden. Unter dem gemeinsamen Träger kann eine Leiterplatte oder eine Platine verstanden werden. Das Speichersystem kann eine Schnittstelle zu dem Mikrocontroller aufweisen. So kann das Speichersystem eine Schnittstelle vergleichbar zu einer Schnittstelle eines DDR-Speichermoduls aufweisen.

Es wird ein Computer-System mit einer Variante eines hier vorgestellten Speichersystems und dem Mikrocontroller vorgestellt, wobei der gemeinsame Träger des Speichersystems und der Mikrocontroller auf einem weiteren Träger angeordnet sind, und wobei eine dritte Schnittstelle der Speicherverwaltungsvorrichtung oder eine Schnittstelle des Speichersystems zu dem Mikrocontroller mit der Schnittstelle des Mikrocontrollers verbunden ist.

Gemäß einer Ausführungsform kann das Computer-System einen nichtflüchtigen Boot-Speicher zum Speichern von Steuerdaten zum Durchführen des Boot-Vorgangs des Mikrocontrollers aufweisen. Der Mikrocontroller kann dabei ausgebildet sein, um über eine Boot-Schnittstelle die Steuerdaten aus dem Boot-Speicher auszulesen, und zum Durchführen des Boot-Vorgangs zeitlich parallel zu dem Schritt des Einlesens (662) zu verwenden.

Von Vorteil ist auch ein Computerprogrammprodukt oder Computerprogramm mit Programmcode, der auf einem maschinenlesbaren Träger oder Speichermedium wie einem Halbleiterspeicher, einem Festplattenspeicher oder einem optischen Speicher gespeichert sein kann und zur Durchführung, Umsetzung und/oder Ansteuerung der Schritte des Verfahrens nach einer der vorstehend beschriebenen Ausführungsformen verwendet wird, insbesondere wenn das Programmprodukt oder Programm auf einem Computer oder einer Vorrichtung ausgeführt wird.

Der hier vorgestellte Ansatz wird nachstehend anhand der beigefügten Zeichnungen beispielhaft näher erläutert. Es zeigen:

Fig. 1 ein Blockschaltbild eines Computer-Systems;

Fig. 2 bis Fig. 5 jeweils ein Blockdiagramm eines Computer-Systems gemäß einem Ausführungsbeispiel der vorliegenden Erfindung;

Fig. 6 ein Ablaufdiagramm eines Verfahrens gemäß einem Ausführungsbeispiel der vorliegenden Erfindung;

Fig. 7 ein Ablaufdiagramm eines Verfahrens gemäß einem Ausführungsbeispiel der vorliegenden Erfindung; und

Fig. 8 eine schematische Darstellung eines Fahrzeugs mit einem Computer-System gemäß einem Ausführungsbeispiel der vorliegenden Erfindung.

In der nachfolgenden Beschreibung günstiger Ausführungsbeispiele der vorliegenden Erfindung werden für die in den verschiedenen Figuren dargestellten und ähnlich wirkenden Elemente gleiche oder ähnliche Bezugszeichen verwendet, wobei auf eine wiederholte Beschreibung dieser Elemente verzichtet wird.

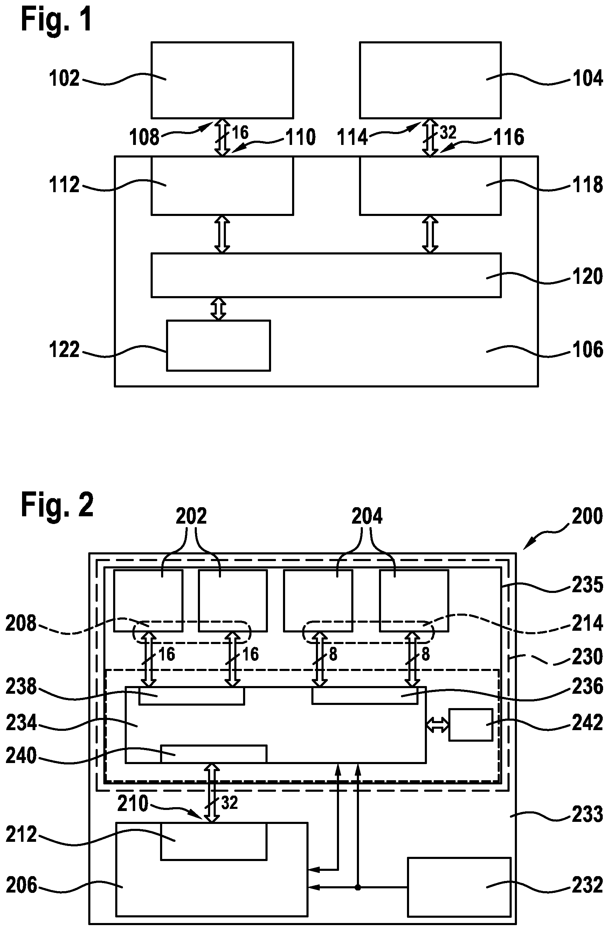

Fig. 1 zeigt ein Blockschaltbild eines Computer-Systems 100. Das Computer-System 100 umfasst einen flüchtigen Speicher 102, einen nichtflüchtigen Speicher 104 sowie einen Mikrocontroller 106. Eine Speicherschnittstelle 108 des flüchtigen Speichers 102 ist mit einer Schnittstelle 110 einer Speicherverwaltungseinheit 112 des Mikrocontrollers 106 verbunden. Eine Speicherschnittstelle 114 des nichtflüchtigen Speichers 104 ist mit einer weiteren Schnittstelle 116 einer weiteren Speicherverwaltungseinheit 118 des Mikrocontrollers 106 verbunden. Eine zentrale Recheneinheit 120 des Mikrocontrollers ist mit der Speicherverwaltungseinheit 112, der weiteren Speicherverwaltungseinheit 118 sowie einem nichtflüchtigen Boot-Speicher in Form eines Boot-ROMs 122 verbunden.

In einem Ausführungsbeispiel ist der flüchtige Speicher 102 über einen 32-Bit breiten Speicherbus mit dem Mikrocontroller 106 verbunden und der nichtflüchtige Speicher 104 über einen 16-Bit breiten Speicherbus mit dem Mikrocontroller verbunden. Der Speicherbus kann auch als ein Datenbus oder einfach nur Bus bezeichnet werden.

Ein mobiles Computersystem, wie beispielsweise das in Fig. 1 gezeigte Computer-System 100, verwendet hochkomplexe Schaltkreise, die alle wesentlichen Untersysteme eines Computers vollständig integrieren. Dies wird auch als "System on a Chip" bezeichnet.. Diesen zentralen Chip nennt man üblicherweise Mikrocontroller 106. Um mit seinen extern angeschlossenen Speichern 102, 104 arbeiten zu können, hat er ein sogenanntes Boot-ROM 122 integriert, welches den Programm-Code für die ersten Aktionen enthält, den sogenannten Boot-Loader. Mit diesem Ur-Start-Programm wird das Laden und Ausführen eines Betriebssystems ermöglicht. Erst danach werden die sogenannten Applikationen geladen und ausgeführt. Dieser ganze Vorgang benötigt bei modernen Rechnersystemen trotz der gestiegenen Rechenleistung eine relativ große Zeit im Bereich 6 Sekunden bis zu mehreren Minuten. Dies ist der ebenso gestiegenen Komplexität der Software geschuldet.

Aus dem Bereich der tragbaren Personal-Computer (Notebook, Laptop) sind verschiedene Stand-by-Zustände bekannt:
Suspend-to-RAM: Hier werden alle nicht benötigten Peripherie-Komponenten heruntergefahren (geordnet abgeschaltet) und die Software in einen inaktiven Zustand gebracht, wobei der Inhalt des flüchtigen Speichers 102 erhalten wird. Dies bedeutet, der Speicher 102 wird weiter mit Strom versorgt und befindet sich im sogenannten Self-Refresh-Mode, in dem er lediglich durch ständiges Auffrischen der Speicherzellen deren Inhalt erhält. Dieser Zustand kann vergleichsweise schnell hergestellt und auch wieder verlassen werden. Allerdings wird dafür ein Stand-by-Strom benötigt. Dieser ist für lang anhaltende Betriebspausen noch nicht niedrig genug - zum Beispiel beim Kraftfahrzeug wird ein Stand-by-Strom für ein Infotainment-Gerät von 100 $\mu$A gefordert und bestenfalls ein Wert unter 1 mA toleriert. Dies ist mit heute üblichen Speichergrößen (ca. 1 GByte) nicht zu schaffen.

Suspend-to-Disk: In diesem Modus wird der Inhalt des Arbeitsspeichers 102 vollständig auf die Festplatte 104 kopiert und der Rechner ganz ausgeschaltet. Bei der Rückkehr in den Normalbetriebsmodus wird zwar die ganze Peripherie-Initialisierung wieder durchlaufen, aber der letzte Zustand wird vollständig und vergleichsweise schnell wieder hergestellt. Die benötigte Zeit ist zwar spürbar kürzer als bei einem Kaltstart, kann aber für viele Anwendungen, wie zum Beispiel im Kraftfahrzeug das Anzeigen des Rückfahrkamerabildes oder das Abspielen eines Warntones zu lang sein.

Im Kraftfahrzeug kann ein Infotainment-System in der Regel nach dem Aufwecken vollständig neu gebootet werden. Um dennoch einige Funktionen schneller zur Verfügung zu stellen, werden besondere Vorkehrungen getroffen. Zum Beispiel existieren für besonders zeitkritische Anforderungen zusätzliche Untersysteme (beispielsweise autarke CAN-Controller) oder es werden Bypass-Lösungen eingesetzt, die zusätzlichen Aufwand bedeuten.

Lediglich beispielhaft können der flüchtige Speicher 102, der nichtflüchtige Speicher 104 sowie der Mikrocontroller 106 je als ein diskretes Bauteil ausgeführt sein. Alternativ können zumindest zwei der Elemente in einem Bauteil integriert sein, sodass auch eine vollintegrierte Lösung realisiert werden kann.

Fig. 2 zeigt ein Blockdiagramm eines Computer-Systems 200 gemäß einem Ausführungsbeispiel der vorliegenden Erfindung. Das Computer-System 200 weist ein Speichersystem 230 sowie einen Mikrocontroller 206 auf. Das Speichersystem 230, der Mikrocontroller 206 sowie eine Versorgungsüberwachungseinrichtung 232 sind als drei diskrete Bauteile oder Einrichtungen auf einem Träger 233 angeordnet. Anstelle diskreter Bauteile kann auch eine integrierte Realisierung gewählt werden.

Der Mikrocontroller 206 weist eine Schnittstelle 210 zu einem Speicher oder Speichersystem 230 auf. Der Mikrocontroller 206 kann eine optionale Speicherverwaltungseinheit 212 aufweisen. In einem solchen Fall weist die Speicherverwaltungseinheit 212 die Schnittstelle 210 zu dem Speicher oder Speichersystem 230 auf. Werden im folgenden Ausführungsbeispiele mit Speicherverwaltungseinheit 212 beschrieben, so ist diese nur als optional anzusehen. Entfällt die Speicherverwaltungseinheit 212, so kann die entsprechend beschriebene Schnittstelle der Speicherverwaltungseinheit 212 als Schnittstelle des Mikrocontrollers aufgefasst werden.

Das Speichersystem 230 umfasst zumindest eine Speicherverwaltungsvorrichtung 234, einen flüchtigen Speicher 202 und einen nichtflüchtigen Speicher 204, die auf einem gemeinsamen Träger 235 angeordnet sind. Die Speicherverwaltungsvorrichtung 234 wird auch als schnelles autarkes Rechenwerk 234 oder Speicherverwaltungseinrichtung 234 bezeichnet. Der gemeinsame Träger 235 der Einrichtungen des Speichersystems 230 ist auf dem Träger 233 des Computer-Systems 200 angeordnet und mit diesem gekoppelt. Eine erste Schnittstelle 236 der Speicherverwaltungsvorrichtung 234 ist mit einer Speicherschnittstelle 214 des nichtflüchtigen Speichers 204 verbunden. Eine zweite Schnittstelle 238 der Speicherverwaltungsvorrichtung 234 ist mit einer Speicherschnittstelle 208 des flüchtigen Speichers 202 verbunden. Eine dritte Schnittstelle 240 der Speicherverwaltungsvorrichtung 234 ist mit der Schnittstelle 210 der Speicherverwaltungseinheit 212 des Mikrocontrollers 206 verbunden.

In dem in Fig. 2 dargestellten Ausführungsbeispiel umfasst der flüchtige Speicher 202 zumindest zwei Module, die über jeweils einen 16-Bit breiten Datenbus mit der zweiten Schnittstelle 238 der Speicherverwaltungsvorrichtung 234 gekoppelt sind, beispielsweise über eine Variante eines DDR-Speicherprotokolls. Der nichtflüchtige Speicher 204 umfasst zumindest zwei Module, die über jeweils einen 8-Bit breiten Datenbus mit der ersten Schnittstelle 236 der Speicherverwaltungsvorrichtung 234 gekoppelt sind. Der Mikrocontroller 206 oder die Schnittstelle 210 der Speicherverwaltungseinheit 212 des Mikrocontrollers 206 ist in dem dargestellten Ausführungsbeispiel über einen 32-Bit breiten Datenbus mit der dritten Schnittstelle 240 der Speicherverwaltungsvorrichtung 234 gekoppelt.

In unterschiedlichen Ausführungsbeispielen variiert die Busbreite der Schnittstellen oder der die Schnittstellen verbindenden Busse. So ist in Ausführungsbeispielen die Speicherschnittstelle 214 des nichtflüchtigen Speichers 204 ausgebildet ist, den nichtflüchtigen Speicher 204 über eine 8-Bit und/oder 16-Bit breite Busschnittstelle und/oder eine Mehrzahl nichtflüchtiger Speicher 204 parallel über eine Mehrzahl von 8-Bit und/oder 16-Bit breiten Busschnittstellen anzubinden. Ferner ist die die Speicherschnittstelle 208 des flüchtigen Speichers 202 ausgebildet, den flüchtigen Speicher 202 über eine 16-Bit und/oder 32-Bit breite Busschnittstelle und/oder eine Mehrzahl nichtflüchtiger Speicher 204 parallel über eine Mehrzahl von 16-Bit und/oder 32-Bit breiten Busschnittstellen anzubinden. Die Schnittstelle 210 der Speicherverwaltungseinheit 212 ist in Ausführungsbeispielen ausgebildet, den Mikrocontroller 206 über eine 32-Bit und/oder 64-Bit breite Busschnittstelle anzubinden.

Die Versorgungsüberwachungseinrichtung 232 ist über eine entsprechende Schnittstelle sowohl mit dem Mikrocontroller 206 als auch mit der Speicherverwaltungsvorrichtung 234 verbunden. Die Versorgungsüberwachungseinrichtung 232 ist ausgebildet, ein Statussignal bereitzustellen, welches einen Hinweis auf eine zusammenbrechende Spannungsversorgung umfasst.

Der Mikrocontroller 206 und die Speicherverwaltungsvorrichtung 234 sind über eine weitere Verbindung miteinander gekoppelt, um Befehle oder Statusmeldungen auszutauschen.

Der Speicherverwaltungsvorrichtung 234 ist ein Flash-Speicher 242 zugeordnet, der beispielsweise als Boot-ROM bei einer Initialisierung eine Startprozedur bereitstellt. Je nach Ausführungsbeispiel ist der Flash-Speicher 242 in die Speicherverwaltungsvorrichtung 234 integriert oder alternativ über eine entsprechende Schnittstelle mit der Speicherverwaltungsvorrichtung 234 verbunden.

Die Speicherverwaltungsvorrichtung 234 ist ausgebildet, von der Speicherschnittstelle 214 des nichtflüchtigen Speichers 204 ansprechend auf eine Information Daten einzulesen und die eingelesenen Daten an der Speicherschnittstelle 208 des flüchtigen Speichers 202 oder an der Schnittstelle 210 der Speicherverwaltungseinheit 212 bereitzustellen.

Ergänzend ist die Speicherverwaltungsvorrichtung 234 in einem Ausführungsbeispiel ausgebildet, ansprechend auf die Information Daten von der Speicherschnittstelle 208 des flüchtigen Speichers 202 oder von der Schnittstelle 210 der Speicherverwaltungseinheit 212 einzulesen und ergänzend die eingelesenen Daten an der Speicherschnittstelle 214 des nichtflüchtigen Speichers 204 bereitzustellen. Vorteilhaft kann somit ein in dem nichtflüchtigen Speicher 204 hinterlegtes Speicherabbild bei einem Systemstart oder bei einem Aufwecken des Computer-Systems 200 effizient in den flüchtigen Speicher 202 übertragen und dem Mikrocontroller 206 bereitgestellt werden. Weiterhin kann ein Speicherabbild des flüchtigen Speichers 202 effizient im nichtflüchtigen Speicher 204 gespeichert werden für ein späteres Aufwecken des Computer-Systems 200 in dem entsprechenden Systemzustand.

In einem Ausführungsbeispiel ist die Speicherverwaltungsvorrichtung 234 ausgebildet, ein Statussignal bereitzustellen, wenn ein Kopiervorgang abgeschlossen ist, das heißt beispielsweise, wenn ein Speicherabbild aus dem nichtflüchtigen Speicher 204 in den flüchtigen Speicher 202 übertragen wurde. In einem Ausführungsbeispiel wird bereits durch das Statussignal signalisiert, wenn ein vorbestimmter Teil eines Speicherabbilds aus dem nichtflüchtigen Speicher 204 in den flüchtigen Speicher 202 übertragen wurde.

In einem Ausführungsbeispiel ist die Speicherverwaltungsvorrichtung 234 weiterhin ausgebildet, die in dem nichtflüchtigen Speicher 204 hinterlegten Daten zu dekomprimieren und die dekomprimierten Daten dem flüchtigen Speicher 202 oder dem Mikrocontroller 206 bereitzustellen. In dem Ausführungsbeispiel ist die Speicherverwaltungsvorrichtung 234 weiterhin ausgebildet, die von der Speicherschnittstelle 208 des flüchtigen Arbeitsspeichers 202 oder der Schnittstelle 210 der Speicherverwaltungseinheit 212 eingelesenen Daten zu Komprimieren bevor diese als komprimierte Daten der Speicherschnittstelle 214 des nichtflüchtigen Speichers 204 bereitgestellt werden.

Das in Fig. 2 dargestellte Ausführungsbeispiel zeigt eine Lösung auf, um das bekannte Verfahren des "Suspend-To-Disk" (englisch für Ruhezustand oder auch Hibernation) auf moderne Computer-Systeme 200 anzuwenden und deutlich zu verbessern, sowohl in Hinblick auf Zeit-Performance, als auch in Hinblick auf Aufwandminimierung. Vorteilhaft wird eine deutliche Beschleunigung des Aufstartens des Computer-Systems 200 nach einem vollständigen Abschalten der Stromversorgung erzielt, um bei geringstem Ruhestromverbrauch trotzdem eine ausreichend schnelle Verfügbarkeit des Computer-Systems 200 zu erreichen. Dadurch werden viele Sondermaßnahmen für spezielle Anforderungen vermieden.

Da ein Computer-System 200 in der Regel einen relativ großen Arbeitsspeicher 202 besitzt, der es erlaubt im Normalbetrieb den größten Teil der Aktivität mit diesem Speicher 202 auszuführen, ist der Ansatz der Idee, ein vollständiges Arbeitsspeicherabbild schnellstmöglich in einen permanenten Speicher 204 zu kopieren. Dies erfolgt bei der in Fig. 1 gezeigten Lösung über den Hauptprozessor, der für beide Arten von Speicher jeweils unterschiedliche Interfaces besitzt, wobei ein Interface für den permanenten Speicher (insbesondere bei Flash-Speicher) bei einem Ausführungsbeispiel des in Fig. 1 gezeigten Computer-Systems nicht so schnell ist wie das Interface zum Hauptarbeitsspeicher (beispielsweise DDR3). Ein Aspekt des in Fig. 2 gezeigten Ausführungsbeispiels ist im Unterschied zu Fig. 1 eine externe Speicherverwaltungseinheit 234, die auch als Memory Controller 234, Recheneinheit 234 oder Beschleuniger 234 bezeichnet wird, einzuführen, deren Aufgabe es ist, an der schnellen Arbeitsspeicher-Schnittstelle 208 während der Boot-Phase die eigenständige Kontrolle zu übernehmen und den flüchtigen Speicher 202 auf direktem Wege mit dem gewünschten Inhalt aus dem langsameren permanenten Speicher 204 zu füllen. Dieser Vorgang kann an diesem neu definierbaren, internen Interface parallelisiert werden und wird außerdem durch den Entfall der sequenziellen Programmabarbeitung (-> einfaches Kopieren) schneller. Alternativ kann in der ansonsten einfach gehaltenen Recheneinheit 234 ein Komprimier- beziehungsweise Dekomprimier-Algorithmus zur Anwendung kommen. Dadurch wird der langsamere Datenstrom auf der Permanentspeicherseite bei einer kleineren Datenmenge umgewandelt in eine größere Datenmenge auf der RAM-Seite bei höherer Geschwindigkeit (und umgekehrt).

Die Abwägung, welche der beiden Möglichkeiten vorteilhafter ist, wird maßgeblich von der Geschwindigkeit des Permanentspeichers 204 bestimmt. Hier ist der Einsatz von gerade neu an den Markt kommenden PCM-Bausteinen (Phase Change Memory) sinnvoll, weil diese deutlich schneller sind als bisherige Flash-Speicher.

Während diese zusätzliche Recheneinheit 234 aktiv ist, kann der Hauptprozessor 206 bereits ohnehin notwendige Initialisierungsarbeiten durchführen, die er wie herkömmlich aus seinem Boot-ROM abarbeitet. Lediglich die Reihenfolge wird so umgestellt, dass nicht wie üblich zuerst das RAM 202 initialisiert wird - dies übernimmt stattdessen die Beschleunigungseinheit 234. Für den Fall, dass das Boot-ROM nicht genügend Kapazität bietet, um den Hauptprozessor 206 während des Kopiervorganges mit anderen Aufgaben zu beschäftigen, ist eine Schachtelung der Aktivitäten möglich, indem bereits vorbereitete RAM-Bereiche vorab dem Hauptprozessor 206 zur Verfügung gestellt werden.

Besonders vorteilhaft ist die Zusammenfassung der Funktionseinheiten Permanentspeicher 204, Beschleuniger 234 und Arbeitsspeicher 202 zu einem Speichersystem 230, welches auch als Multichip-Modul 230 bezeichnet wird. Damit entsteht eine neue optimierte Speichereinheit 230, die nur noch über ein externes Interface 240 an den Mikrocontroller 206 angeschlossen wird - wie bisher der Arbeitsspeicher 202.

Das spart die bisherige Flash-Schnittstelle am Mikrocontroller ein - sowohl die interne Speichermanagementeinheit als auch die zugehörigen Anschlüsse:

Beispiel 1:
NOR-Flash mit 16-bit-Busbreite: 16x Data + 25x Adress + 5x Control = 46 Leitungen/Pins
Typische maximale Geschwindigkeit: Lesen 128 MByte/s, Schreiben 1,2 MByte/s
Beispiel 2:
eMMC (managed NAND-Flash) mit 8-bit-Busbreite: 8x Data + 3x Control = 11 Leitungen/Pins

Typische maximale Geschwindigkeit: Lesen 44 MByte/s, Schreiben 20 MByte/s

Dagegen ist die RAM-Schnittstelle mit 32 Bit Breite ohnehin vorhanden und wird beispielsweise mit 533 MHz (oder mehr) betrieben:

$$533 \text{ MHz DDR} * 32 \text{ Bit} = 1066 \text{ T/s} * 4 \text{ Byte} = 4{,}264 \text{ GByte/s maximal}$$

Generell stehen für permanente Speicher 204 noch weitere Schnittstellen zur Verfügung, aber sie benötigen alle eine eigene spezielle Schnittstelle und sind in einem ähnlichen Aufwand-Geschwindigkeit-Dilemma.

Fig. 2 zeigt den prinzipiellen Aufbau einer erfindungsgemäßen Anordnung. Gegeben ist ein Mikrocontroller 206 mit einer schnellen Arbeitsspeicher-Schnittstelle 210 über eine Memory Management Unit 212, die über einen externen Bus den schnellen flüchtigen Speicher 202 (RAM) an das System anbindet.

Neu ist das zwischengeschaltete schnelle autarke Rechenwerk 234 (Controller), das über eine Schnittstelle 240 die standardmäßige Schnittstelle (JEDEC, beispielsweise JESD79) von RAM Bausteinen zur Verfügung stellt. Über eine zweite Schnittstelle 238 sind dann diese standardgemäßen RAM-Bausteine 202 selber angeschlossen. Die Recheneinheit 234 verfügt nun über eine zusätzliche Speicher-Schnittstelle 236, über die ein oder mehrere nichtflüchtige Speicher 204 angeschlossen sind. Damit ermöglicht die Recheneinheit 234 die schnelle Anbindung von mehreren langsameren Permanentspeichern 204 an die Hauptrecheneinheit 206 (Mikrocontroller 206). Durch die Parallelisierung in diesem externen Speichersystem 230 ist auch die direkte konventionelle Nutzung dieses Speichers bereits beschleunigt. Dies kann beispielsweise durch Einblendung des Flash-Speichers 204 im erweiterten Adressbereich auf der RAM-Schnittstelle 210 des Mikrocontrollers 206 erfolgen.

Die neue Funktion ist nun, dass die Recheneinheit 234 nach Anlegen der Versorgungsspannung und nach Maßgabe von Informationen von der Zentraleinheit und/oder der Systemüberwachung 232 (System Power Management) eigenständig einen schnellen Kopiervorgang vom nichtflüchtigen Speicher 204 in den Arbeitsspeicher 202 durchführt. Dies kann entsprechend den Informationen ein System-Neustart (Kaltstart) sein, bei dem eine entsprechend vorbereitete Speicherkopie anstelle der sonst üblichen Programmdaten im Permanentspeicher 204 vorgehalten ist. Der zweite wesentliche Modus ist die Wiederaufnahme des Normalbetriebes unter Verwendung eines Arbeitsspeicher-Abbildes, das zum Zeitpunkt der Betriebsunterbrechung in einem dafür reservierten Bereich des Permanentspeichers 204 abgelegt wurde.

Folgerichtig stellt die Recheneinheit 234 auch eine dritte Funktion bereit, die automatisch ein Speicherabbild vom flüchtigen Speicher 202 im permanenten Speicher 204 erstellt. Der Vorteil entsteht aus der Einfachheit des Programms, das an dieser Stelle von der Recheneinheit 234 intern ausgeführt wird. Dies führt zu einer sehr kurzen Aufstartzeit und somit schneller Verfügbarkeit.

Die Recheneinheit 234 kann außerdem diese beschränkte Funktion optimal schnell ausführen. Während diese automatische Funktion außerhalb der Hauptrechnereinheit 206 ausgeführt wird, kann die Hauptrechnereinheit 206 andere notwendige Initialisierungsschritte ausführen. Diese Parallelisierung ist ein weiterer Vorteil dieser Anordnung.

Die Nutzung dieses Vorteils hängt maßgeblich von der Größe und Variabilität des Boot-ROMs ab. Um mögliche Beschränkungen an dieser Stelle zu überwinden, ist eine wesentliche Variante der erfindungsgemäßen Anordnung, die Segmentierung des zu bearbeitenden Gesamtspeicherbereiches, um durch eine zeitliche Verzahnung der beiden parallelen Aktivitäten die Rechenleistung beider Einheiten voll auszuschöpfen. Das heißt beispielsweise für den Systemstart, dass nachdem ein erster Teil des Arbeitsspeichers 202 fertig vorbereitet ist, dies an die Hauptrecheneinheit 206 signalisiert wird und diese mit der Ausführung des Programm-Codes in diesem Speicherbereich beginnt, während der verbleibende Speicher 202 weiter durch die externe Einheit 234 vorbereitet wird.

Diese Segmentierung kann vorteilhaft dazu verwendet werden, den Boot-Vorgang in mehreren Phasen durchzuführen, um schnell benötigte Funktionen bereits verfügbar zu haben, während nicht so zeitkritische Funktionen weiter im Hintergrund vorbereitet werden. Damit sind im Fahrzeug-Infotainment-Bereich typische Forderungen, wie zum Beispiel "early gong" (akustisches Warnsignal) oder "schnelles Aufschalten des Rückfahrkamerabildes", ohne aufwendige Zusatz-Hardware realisierbar.

Aus der Wahl der Art des permanenten Speichers 204 ergeben sich verschiedene Ausprägungen dieser Grundanordnung. Die angestrebte Beschleunigung dieser Vorgänge kann am einfachsten durch einen möglichst schnellen permanenten Speicher 204 erreicht werden, was beispielsweise bei Verwendung von PCM (Phase Change Memory) der Fall ist. Diese Speicher sind zumindest beim Lesen nahezu genauso schnell wie übliche Arbeitsspeicher (beispielsweise DDR3). Für diesen Fall stellt die Recheneinheit 234 auch auf dieser Schnittstelle 236 ein vergleichbares Interface bereit. Der Speicherbedarf im permanenten Speicher 204 wäre dann mindestens doppelt so viel Kapazität wie beim flüchtigen Speicher 202.

Eine andere Ausprägung ist die Verwendung von parallelem Nor-Flash-Speicher oder SLC-Nand-Flash-Speicher, der ebenfalls beim Lesen eine leidlich hohe Geschwindigkeit erreicht und ausreichend hohe Zuverlässigkeiten aufweist (im Gegensatz zu den preiswerteren MLC-Nands). In diesem Fall ist eine andere Schnittstelle bereitzustellen, die sonst vom Mikrocontroller 206 bereitgestellt wird. Diese Schnittstelle ist damit im Mikrocontroller 206 nicht mehr notwendig. Es entfallen die dafür benötigten Anschlüsse und ein extern zu verdrahtender Bus. Die gleichzeitige Verwaltung mehrerer Flash-Chips mit jeweils nur 8-Bit breiter Anbindung erzielt hier eine entsprechende Beschleunigung.

Vergleichbar einer eMMC Anordnung übernimmt der Controller 234 dieser externen Speichereinheit 230 vorteilhafterweise auch die typischen Verwaltungsaufgaben für Flash Speicher - beispielsweise Fehlerkorrektur (ECC), Abnutzungsverteilung (wear out leveling) und Defekt-Block-Management (bad block management).

Eine weitere erfindungsgemäße Variante fügt der Recheneinheit 234 die Funktion zur Komprimierung und Dekomprimierung hinzu, sodass beim Kopieren vom RAM 202 in den Permanentspeicher 204 die Datenmenge reduziert wird, was zum einen den Geschwindigkeitsnachteil des Flash-Speichers 204 beim Schreiben abmildert und zum anderen kleinere Kapazitäten im Permanentspeicher 204 erfordert.

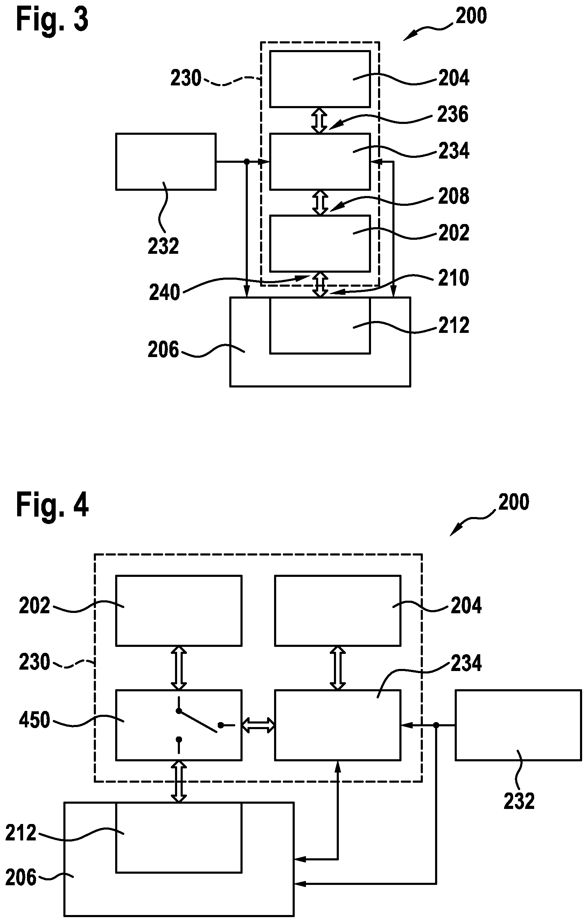

Fig. 3 zeigt ein Blockdiagramm eines Computer-Systems 200 gemäß einem Ausführungsbeispiel der vorliegenden Erfindung. Das Computer-System 200 umfasst ein Speichersystem 230, einen Mikrocontroller 206 sowie eine Versorgungsüberwachungseinrichtung 232. Bei dem Computer-System 200 kann es sich um ein Ausführungsbeispiel eines in Fig. 2 gezeigten Computer-Systems 200 handeln. Das Speichersystem 230 umfasst eine Speicherverwaltungsvorrichtung 234, die wie bereits in Fig. 2 gezeigt mit einem nichtflüchtigen Speicher 204 sowie einem flüchtigen Speicher 202 verbunden ist. Die Schnittstelle 210 der Speicherverwaltungseinheit 212 des Mikrocontrollers 206 ist über eine zweite Schnittstelle 240 des flüchtigen Speichers 202 mit dem Speichersystem 230 verbunden.

So zeigt Fig. 3 den prinzipiellen Aufbau einer erfindungsgemäßen Anordnung. Gegeben ist ein Mikrocontroller 206 mit einer schnellen Arbeitsspeicher-Schnittstelle 210, die über einen externen Bus den schnellen flüchtigen Speicher 202 (RAM) an das System 200 anbindet. In der in Fig. 3 dargestellten Ausprägung verfügt dieses RAM 202 über zwei externe Schnittstellen, die einen gleichzeitigen Zugriff gestatten (dual ported RAM). An der zweiten Schnittstelle 208 dieses Speichers 202 ist die Speicherverwaltungsvorrichtung 234 angeschlossen. Die Speicherverwaltungsvorrichtung 234 weist ihrerseits eine zweite Speicherschnittstelle 236 auf, über die ein nichtflüchtiger Speicher 204, zum Beispiel ein Nand-Flash-Speicher mit hoher Kapazität (eMMC) angebunden ist.

Fig. 4 zeigt ein Blockdiagramm eines Computer-Systems 200 gemäß einem Ausführungsbeispiel der vorliegenden Erfindung. Bei dem Computer-System 200 kann es sich um ein Ausführungsbeispiel eines in den vorangegangenen Figuren gezeigten Computer-Systems 200 handeln. Hier wird ein Bus-Schalter 450 zwischen den flüchtigen Speicher 202 und den Memory-Controller 212 im Mikrocontroller 206 eingefügt, der den flüchtigen Speicher 202 temporär direkt mit dem autarken Rechenwerk 234 verbindet. Dieses Rechenwerk 234 kann beispielsweise durch ein CPLD realisiert werden. Diese Recheneinheit 234 ihrerseits ist exklusiv über eine passende Schnittstelle mit dem nichtflüchtigen Speicher 204 verbunden. Der Mikrocontroller 206 hat also keine eigene Verbindung mehr zum nichtflüchtigen Speicher 204 und startet also nicht mehr durch direktes Lesen des Progamm-Codes aus diesem. Der interne Boot-Loader ist entsprechend angepasst, dass stattdessen eine Kommunikation mit dem autarken Rechenwerk 234, dem "Startbeschleuniger" 234, über entsprechende Steuerleitungen stattfindet, bevor die Programm-Ausführung aus dem RAM 202 fortgesetzt wird.

In allen Varianten ist eine Steuerleitungsverknüpfung mit einer Versorgungsüberwachung 232 vorteilhaft, um im Falle eines Bordnetz-Zusammenbruchs eine schnelle Datenrettung durch den Startbeschleuniger 234 geordnet einzuleiten, solange die Speicherreserven des Netzteils dies zulassen. Auch für diesen "Unterspannungsfall" bietet der Startbeschleunigung die Verbesserung einer möglichen kompletten Sicherung, wie im Stand-by-Fall, um das Wiederaufstarten in den vorherigen Zustand zu beschleunigen. Die beschriebene Anordnung kann durch einfache Erweiterung bestehender Standards (JEDEC, beispielsweise JESD79) Eingang in fertig angebotene komplexe Speicherbausteine finden.

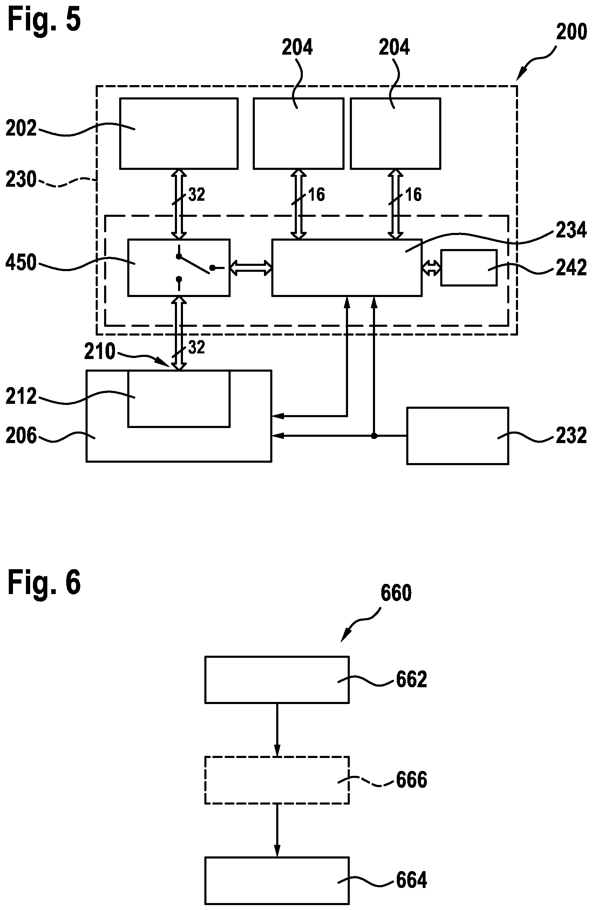

Fig. 5 zeigt ein Blockdiagramm eines Computer-Systems 200 gemäß einem Ausführungsbeispiel der vorliegenden Erfindung. Bei dem Computer-System 200 kann es sich um ein Ausführungsbeispiel eines in den vorangegangenen Figuren gezeigten Computer-Systems 200 handeln. Fig. 5 zeigt eine weitere vorteilhafte Ausprägung einer erfindungsgemäßen Anordnung. In dieser Ausprägung wird der flüchtige Speicher 202 über einen Bus an den Mikrocontroller 206 angebunden, der 32 Datenleitungen enthält, was bei modernen Computer-Systemen 200 zurzeit ein Standard ist. Gleichzeitig ist heute aber die Datenbusbreite für Flash-Speicher 204 mit 16 Datenleitungen Standard, das heißt, die Flash-Schnittstelle erfährt auch hier einen Geschwindigkeitsnachteil. In dieser Ausprägung stellt der Beschleunigerbaustein 234 mehr als eine Schnittstelle zur Anbindung von nichtflüchtigen Speichern 204 zur Verfügung. Sodass bereits bei Verwendung von zwei Flash-Bausteinen 204 eine Verdopplung der Geschwindigkeit, insbesondere auch beim kritischen Schreiben erreicht wird. Bei Umsetzung der Beschleunigerfunktion unter Verwendung eines CPLD (Complex Programmable Logic Device) wird die Funktion des Bus-Schalters 450 einfach mit übernommen, indem eine zweite vollständige RAM-Speicherschnittstelle zur Verfügung gestellt wird. Diese Schnittstelle wird mit der Speicherschnittstelle 210 im Mikrocontroller 206 verbunden. Genau diese Anordnung lässt sich auch vorteilhaft als ein Gesamtmodul 230 aufbauen, welches wiederum als Multi-Chip-Package (MCP) direkt auf Chip-Ebene besonders vorteilhaft ist.

Fig. 6 zeigt ein Ablaufdiagramm eines Verfahrens 660 zum Übertragen von Daten innerhalb eines Computer-Systems gemäß einem Ausführungsbeispiel der vorliegenden Erfindung. Das Verfahren 660 zum Übertragen von Daten innerhalb eines Computer-Systems zwischen einer Speicherschnittstelle eines flüchtigen Speichers, einer Speicherschnittstelle eines nichtflüchtigen Speichers und einer Schnittstelle einer Speicherverwaltungseinheit eines Mikrocontrollers umfasst einen Schritt 662 des Einlesens von Daten von der Speicherschnittstelle des nichtflüchtigen Speichers ansprechend auf eine Information sowie einen Schritt 664 des Bereitstellens der eingelesenen Daten an der Speicherschnittstelle des flüchtigen Speichers und/oder der Schnittstelle der Speicherverwaltungseinheit des Mikrocontrollers.

Das Verfahren 650 kann in einem Ausführungsbeispiel auf einer Variante der in den vorangegangenen Figuren gezeigten Speicherverwaltungsvorrichtung 230 ausgeführt werden.

In einem Ausführungsbeispiel werden im Schritt 662 des Einlesens ansprechend auf die Information Daten über die Speicherschnittstelle des flüchtigen Speichers und/oder die Schnittstelle der Speicherverwaltungseinheit eingelesen. Im Schritt 664 des Bereitstellens werden die eingelesenen Daten an der Speicherschnittstelle des nichtflüchtigen Speichers bereitgestellt und/oder ein in dem flüchtigen Speicher gespeichertes Speicherabbild und/oder ein Teil davon als eingelesene Daten an der Speicherschnittstelle des nichtflüchtigen Speichers und/oder der Schnittstelle der Speicherverwaltungseinheit bereitgestellt.

In einem Ausführungsbeispiel umfasst das Verfahren 660 einen optionalen Schritt 666 des Komprimierens und Dekomprimierens, der zwischen dem Schritt 662 des Einlesens und dem Schritt 664 des Bereitstellens ausgeführt wird. In dem optionalen Schritt 666 des Komprimierens und Dekomprimierens werden die im Schritt 662 des Einlesens eingelesenen Daten komprimiert und/oder dekomprimiert, um dann im darauf folgenden Schritt 664 des Bereitstellens die komprimierten Daten und/oder dekomprimierten Daten bereitzustellen.

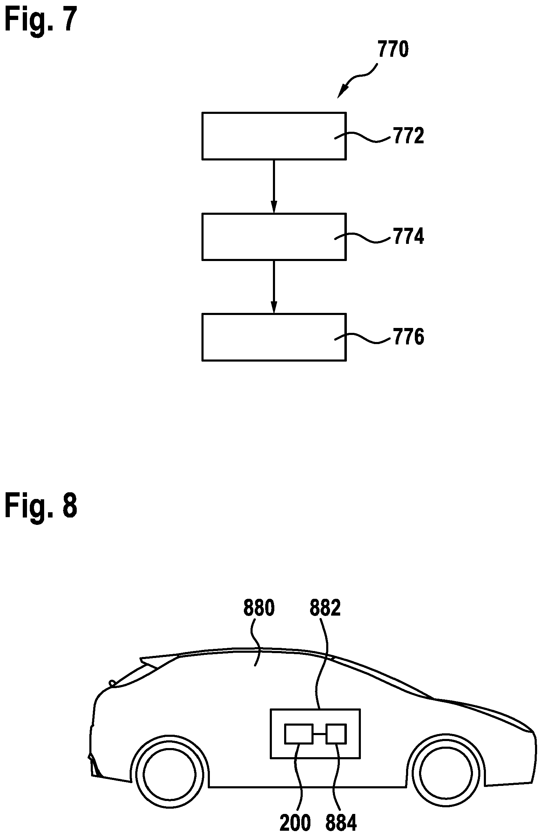

Fig. 7 zeigt ein Ablaufdiagramm eines Verfahrens 770 zum Betreiben eines Computer-Systems gemäß einem Ausführungsbeispiel der vorliegenden Erfindung. Das Verfahren 770 zum Betreiben eines Computer-Systems 200 umfasst zumindest einen Schritt 772 des Einlesens, einen Schritt 774 des Initialisierens sowie einen Schritt 776 des Bereitstellens. Bei dem Computer-System 200 kann es sich um ein Ausführungsbeispiel eines in Fig. 2 bis Fig. 5 beschriebenen Computer-Systems 200 handeln, wobei der Mikrocontroller über eine weitere Schnittstelle mit einer Schnittstelle eines Boot-ROMs verbunden ist. Im Schritt 772 des Einlesens wird eine Start-Sequenz von der Schnittstelle des Boot-ROMs eingelesen. Bei der Start-Sequenz kann es sich dabei um Programm-Code oder eine Abfolge von Befehlen handeln. Im Schritt 774 des Initialisierens werden Einrichtungen und Schnittstellen des Computer-Systems unter Verwendung der eingelesenen Start-Sequenz initialisiert. Parallel zum Schritt des Initialisierens 774 wird die Information dem Speichersystem beziehungsweise der Speicherverwaltungsvorrichtung des Speichersystems bereitgestellt, um zumindest den Schritt 662 des Einlesens und den Schritt 664 des Bereitstellens einer Variante des bereits in Fig. 6 dargestellten Verfahrens 660 zum Übertragen von Daten innerhalb des Computer-Systems parallel zum Schritt des Initialisierens auszuführen.

In einem Ausführungsbeispiel ist das Bereitstellen der Information ein Befehl der Start-Sequenz und triggert ein Initialisieren des flüchtigen Speichers des Speichersystems.

Fig. 8 zeigt eine schematische Darstellung eines Fahrzeugs 880 mit einem Computer-System 200 gemäß einem Ausführungsbeispiel der vorliegenden Erfindung. Bei dem Computer-System 200 kann es sich um ein Ausführungsbeispiel eines in Fig. 2 bis Fig. 5 beschriebenen Computer-Systems 200 handeln.

Das Fahrzeug 880 weist ein Infotainment-System 882 auf. Das Infotainment-System 882 umfasst eine Variante eines Computer-Systems 200 sowie zumindest eine Einrichtung 884 wie beispielsweise ein Anzeigegerät 884, welche mit dem Computer-System 200 gekoppelt ist. Dabei steht das Infotainment-System 882 stellvertretend für eine ein Computer-System 200 umfassende Vorrichtung 882. Ein alternatives Ausführungsbeispiel ist beispielsweise ein Fahrer-Assistenzsystem 882, welches ein Computer-System 200 aufweist.

Die beschriebenen und in den Figuren gezeigten Ausführungsbeispiele sind nur beispielhaft gewählt. Unterschiedliche Ausführungsbeispiele können vollständig oder in Bezug auf einzelne Merkmale miteinander kombiniert werden. Auch kann ein Ausführungsbeispiel durch Merkmale eines weiteren Ausführungsbeispiels ergänzt werden. Ferner können die hier vorgestellten Verfahrensschritte wiederholt sowie in einer anderen als in der beschriebenen Reihenfolge ausgeführt werden.

Umfasst ein Ausführungsbeispiel eine "und/oder"-Verknüpfung zwischen einem ersten Merkmal und einem zweiten Merkmal, so ist dies so zu lesen, dass das Ausführungsbeispiel gemäß einer Ausführungsform sowohl das erste Merkmal als auch das zweite Merkmal und gemäß einer weiteren Ausführungsform entweder nur das erste Merkmal oder nur das zweite Merkmal aufweist.

**Patentansprüche**

1. Speicherverwaltungsvorrichtung (234) zum Übertragen von Daten innerhalb eines Computer-Systems (200) zwischen einer Speicherschnittstelle (208) eines flüchtigen Speichers (202), einer Speicherschnittstelle (214) eines nichtflüchtigen Speichers (204) und einer Schnittstelle (210) eines Mikrocontrollers (206), wobei die Speicherverwaltungsvorrichtung (234) ausgebildet ist, um Daten von der Speicherschnittstelle (214) des nichtflüchtigen Speichers (204) ansprechend auf eine den Beginn eines Boot-Vorgangs des Mikrocontrollers (206) anzeigende Information über eine erste Schnittstelle (236) der Speicherverwaltungsvorrichtung (234) einzulesen und die eingelesenen Daten an die Speicherschnittstelle (208) des flüchtigen Speichers (202) über eine zweite Schnittstelle (238) der Speicherverwaltungsvorrichtung (234) bereitzustellen,

**dadurch gekennzeichnet, dass**

die Speicherverwaltungsvorrichtung (234) ausgebildet ist, an der Speicherschnittstelle (208) während des Boot-Vorgangs die eigenständige Kontrolle zu übernehmen und den flüchtigen Speicher (202) auf direktem Wege mit den Daten aus dem nichtflüchtigen Speicher (204) zu füllen.

2. Speicherverwaltungsvorrichtung (234) gemäß Anspruch 1, bei dem die Information eine über die Schnittstelle zu dem Mikrocontroller (206) empfangene Information repräsentiert.

3. Speicherverwaltungsvorrichtung (234) gemäß einem der vorangegangenen Ansprüche, bei dem die Daten ein vollständiges Arbeitsspeicherabbild des Mikrocontrollers (206) darstellen.

4. Speicherverwaltungsvorrichtung (234) gemäß einem der vorangegangenen Ansprüche, die ausgebildet ist, um ein Statussignal an den Mikrocontroller (206) nach Abschluss des Bereitstellens der eingelesenen Daten bereitzustellen, um eine abgeschlossene Datenübertragung zu signalisieren.

5. Speicherverwaltungsvorrichtung (234) gemäß einem der vorangegangenen Ansprüche, die ausgebildet ist, um die eingelesenen Daten zu Komprimieren oder zu Dekomprimieren.

6. Speicherverwaltungsvorrichtung (234) gemäß einem der vorangegangenen Ansprüche, wobei sich eine Busbreite der Speicherschnittstelle (214) des nichtflüchtigen Speichers (204) und/oder der Speicherschnittstelle (208) des flüchtigen Speichers (202) und/oder der Schnittstelle (210) des Mikrocontrollers (206) unterscheidet, insbesondere wobei die Speicherschnittstelle (214) des nichtflüchtigen Speichers (204) ausgebildet ist, den nichtflüchtigen Speicher (204) über eine 8-Bit und/oder 16-Bit breite Busschnittstelle und/oder eine Mehrzahl nichtflüchtiger Speicher (204) parallel über eine Mehrzahl von 8-Bit und/oder 16-Bit breiten Busschnittstellen anzubinden und/oder wobei die Speicherschnittstelle (208) des flüchtigen Speichers (202) ausgebildet ist, den flüchtigen Speicher (202) über eine 16-Bit und/oder 32-Bit breite Busschnittstelle und/oder eine Mehrzahl nichtflüchtiger Speicher (204) parallel über eine Mehrzahl von 16-Bit und/oder 32-Bit breiten Busschnittstellen anzubinden und/oder wobei die Schnittstelle (210) des Mikrocontrollers (206) ausgebildet ist, den Mikrocontroller (206) über eine 32-Bit und/oder 64-Bit breite Busschnittstelle anzubinden.

7. Speicherverwaltungsvorrichtung (234) gemäß einem der vorangegangenen Ansprüche, die ausgebildet ist, um den Mikrocontroller (206) im beim Einlesen und/oder beim Bereitstellen über ein DDR-Protokoll und/oder eine Variante eines DDR-Protokolls anzusprechen.

8. Speicherverwaltungsvorrichtung (234) gemäß einem der vorangegangenen Ansprüche, wobei der flüchtige Speicher (202) als ein DDR3-Speicher oder ein DDR4-Speicher ausgeführt ist und/oder wobei der nichtflüchtige Speicher (204) als ein PCM-Speicher und/oder ein paralleler SLC-Nand-Flash-Speicher und/oder ein MLC-Nand-Speicher und/oder ein NOR-Flash und/oder ein eMMC-Speicher und/oder ein ROM und/oder eine Festplatte ausgeführt ist.

9. Speicherverwaltungsvorrichtung (234) gemäß einem der vorangegangenen Ansprüche, bei dem der flüchtige Speicher (202) als diskretes Bauteil, der nichtflüchtige Speicher (204) als weiteres diskretes Bauteil und der Mikrokontroller (206) als zusätzliches diskretes Bauteil ausgeführt sind.

10. Speichersystem (230) mit dem als diskretes Bauteil ausgeführten flüchtigen Speicher (202) und dem als weiteres diskretes Bauteil ausgeführten nichtflüchtigen Speicher (204) sowie der Speicherverwaltungsvorrichtung (234) gemäß einem der vorangegangenen Ansprüche, die auf einem gemeinsamen Träger (235) angeordnet sind, wobei die erste Schnittstelle (236) der Speicherverwaltungsvorrichtung (234) mit der Speicherschnittstelle (214) des nichtflüchtigen Speichers (204) verbunden ist und die zweite Schnittstelle (238) der Speicherverwaltungsvorrichtung (234) mit der Speicherschnittstelle (208) des flüchtigen Speichers (202) verbunden ist.

11. Computer-System (200) für ein Fahrzeug, wobei das Computer-System (200) ein Speichersystem (230) gemäß Anspruch 10 und den Mikrocontroller (206) aufweist, wobei der gemeinsame Träger (235) des Speichersystems (230) und der Mikrocontroller (206) auf einem weiteren Träger (233) angeordnet sind, und wobei eine dritte Schnittstelle (240) der Speicherverwaltungsvorrichtung (234) mit der Schnittstelle (210) des Mikrocontrollers (206)verbunden ist.

12. Computer-System (200) gemäß Anspruch 11, mit einem nichtflüchtigen Boot-Speicher (122) zum Speichern von Steuerdaten zum Durchführen des Boot-Vorgangs des Mikrocontrollers (206), wobei der Mikrocontroller (206) ausgebildet ist, um über eine Boot-Schnittstelle die Steuerdaten aus dem Boot-Speicher (122) auszulesen, und zum Durchführen des Boot-Vorgangs zeitlich parallel zu dem Schritt des Einlesens (662) zu verwenden.

**Claims**

1. Memory management apparatus (234) for transmitting data inside a computer system (200) between a memory interface (208) of a volatile memory (202), a memory interface (214) of a non-volatile memory (204) and an interface (210) of a microcontroller, (206), wherein the memory management apparatus (234) is designed to read in data from the memory interface (214) of the non-volatile memory (204) via a first interface (236) of the memory management apparatus (234) in response to an item of information indicating the start of a boot process of the microcontroller (206) and to make the data which have been read in available to the memory interface (208) of the volatile memory (202) via a second interface (238) of the memory management apparatus (234),
**characterized in that**
the memory management apparatus (234) is designed to assume independent control at the memory interface (208) during the boot process and to directly fill the volatile memory (202) with the data from the non-volatile memory (204).

2. Memory management apparatus (234) according to Claim 1, in which the information represents an item of information received via the interface to the microcontroller (206).

3. Memory management apparatus (234) according to one of the preceding claims, in which the data represent a complete main memory image of the microcontroller (206).

4. Memory management apparatus (234) according to one of the preceding claims, which is designed to provide the microcontroller (206) with a status signal after the provision of the data which have been read in has been concluded in order to signal a concluded data transmission.

5. Memory management apparatus (234) according to one of the preceding claims, which is designed to compress or decompress the data which have been read in.

6. Memory management apparatus (234) according to one of the preceding claims, wherein a bus width of the memory interface (214) of the non-volatile memory (204) and/or of the memory interface (208) of the volatile memory (202) and/or of the interface (210) of the microcontroller (206) differs, in particular wherein the memory interface (214) of the non-volatile memory (204) is designed to connect the non-volatile memory (204) via a bus interface having a width of 8 bits and/or 16 bits and/or to connect a plurality of non-volatile memories (204) in a parallel manner via a plurality of bus interfaces having a width of 8 bits and/or 16 bits, and/or wherein the memory interface (208) of the volatile memory (202) is designed to connect the volatile memory (202) via a bus interface having a width of 16 bits and/or 32 bits and/or to connect a plurality of non-volatile memories (204) in a parallel manner via a plurality of bus interfaces having a width of 16 bits and/or 32 bits, and/or wherein the interface (210) of the microcontroller (206) is designed to connect the microcontroller (206) via a bus interface having a width of 32 bits and/or 64 bits.

7. Memory management apparatus (234) according to one of the preceding claims, which is designed to address the microcontroller (206) during reading-in and/or during provision via a DDR protocol and/or a variant of a DDR protocol.

8. Memory management apparatus (234) according to one of the preceding claims, wherein the volatile memory (202) is in the form of a DDR3 memory or a DDR4 memory, and/or wherein the non-volatile memory (204) is in the form of a PCM memory and/or a parallel SLC NAND flash memory and/or an MLC NAND memory and/or a NOR flash memory and/or an eMMC memory and/or a ROM and/or a hard disk.

9. Memory management apparatus (234) according to one of the preceding claims, in which the volatile memory (202) is in the form of a discrete component, the non-volatile memory (204) is in the form of a further discrete component and the microcontroller (206) is in the form of an additional discrete component.

**10.** Memory system (230) having the volatile memory (202) in the form of a discrete component and the non-volatile memory (204) in the form of a further discrete component and the memory management apparatus (234) according to one of the preceding claims, which are arranged on a common carrier (235), wherein the first interface (236) of the memory management apparatus (234) is connected to the memory interface (214) of the non-volatile memory (204) and the second interface (238) of the memory management apparatus (234) is connected to the memory interface (208) of the volatile memory (202).

**11.** Computer system (200) for a vehicle, wherein the computer system (200) has a memory system (230) according to Claim 10 and the microcontroller (206), wherein the common carrier (235) of the memory system (230) and the microcontroller (206) are arranged on a further carrier (233), and wherein a third interface (240) of the memory management apparatus (234) is connected to the interface (210) of the microcontroller (206).

**12.** Computer system (200) according to Claim 11, having a non-volatile boot memory (122) for storing control data for carrying out the boot process of the microcontroller (206), wherein the microcontroller (206) is designed to read the control data from the boot memory (122) via a boot interface and to carry out the boot process in parallel with the reading-in step (662) in terms of time.

**Revendications**

**1.** Dispositif de gestion de mémoire (234) destiné à transmettre des données à l'intérieur d'un système informatique (200) entre une interface de mémoire (208) d'une mémoire volatile (202), une interface de mémoire (214) d'une mémoire non volatile (204) et une interface (210) d'un microcontrôleur (206), le dispositif de gestion de mémoire (234) étant configuré pour lire les données de l'interface de mémoire (214) de la mémoire non volatile (204) en réaction à une information signalant le débit d'une opération d'amorçage du microcontrôleur (206) par le biais d'une première interface (236) du dispositif de gestion de mémoire (234) et fournir les données lues au niveau de l'interface de mémoire (208) de la mémoire volatile (202) par le biais d'une deuxième interface (238) du dispositif de gestion de mémoire (234),
**caractérisé en ce que**
le dispositif de gestion de mémoire (234) est configuré pour prendre en charge le contrôle autonome au niveau de l'interface de mémoire (208) pendant l'opération d'amorçage et remplir la mémoire volatile (202) par voie directe avec les données provenant de la mémoire non volatile (204).

**2.** Dispositif de gestion de mémoire (234) selon la revendication 1, avec lequel l'information représente une information reçue par le biais d'une interface vers le microcontrôleur (206).

**3.** Dispositif de gestion de mémoire (234) selon l'une des revendications précédentes, avec lequel les données représentent une image de mémoire de travail complète du microcontrôleur (206).

**4.** Dispositif de gestion de mémoire (234) selon l'une des revendications précédentes, qui est configuré pour fournir un signal d'état au microcontrôleur (206) après la fin de la fourniture des données lues, afin de signaler une transmission de données terminée.

**5.** Dispositif de gestion de mémoire (234) selon l'une des revendications précédentes, qui est configuré pour compresser ou décompresser les données lues.

**6.** Dispositif de gestion de mémoire (234) selon l'une des revendications précédentes, une largeur de bus de l'interface de mémoire (214) de la mémoire non volatile (204) et/ou de l'interface de mémoire (208) de la mémoire volatile (202) et/ou de l'interface (210) du microcontrôleur (206) étant différentes, l'interface de mémoire (214) de la mémoire non volatile (204) étant notamment configurée pour connecter la mémoire non volatile (204) par le biais d'une interface de bus de 8 bits et/ou de 16 bits de large et/ou une pluralité de mémoires non volatiles (204) en parallèle par le biais d'une pluralité d'interfaces de bus de 8 bits et/ou de 16 bits de large et/ou l'interface de mémoire (208) de la mémoire volatile (202) étant configurée pour connecter la mémoire volatile (202) par le biais d'une interface de bus de 16 bits et/ou de 32 bits de large et/ou une pluralité de mémoires non volatiles (204) en parallèle par le biais d'une pluralité d'interfaces de bus de 16 bits et/ou de 32 bits de large et/ou l'interface (210) du microcontrôleur (206) étant configurée pour connecter le microcontrôleur (206) par le biais d'une interface de bus de 32 bits et/ou de 64 bits de large.

**7.** Dispositif de gestion de mémoire (234) selon l'une des revendications précédentes, lequel est configuré pour entrer en contact avec le microcontrôleur (206) par le biais d'un protocole DDR et/ou d'une variante d'un protocole DDR lors de la lecture et/ou de la fourniture.

**8.** Dispositif de gestion de mémoire (234) selon l'une des revendications précédentes, la mémoire volatile (202) étant réalisée sous la forme d'une mémoire DDR3 ou d'une mémoire DDR4 et/ou la mémoire non volatile (204) étant réalisée sous la forme d'une mémoire PCM et/ou d'une mémoire Flash SLC Nand parallèle et/ou d'une mémoire Flash MLC Nand et/ou d'une mémoire Flash NOR et/ou d'une mémoire eMMC et/ou d'une ROM et/ou d'un disque dur.

**9.** Dispositif de gestion de mémoire (234) selon l'une des revendications précédentes, avec lequel la mémoire volatile (202) est réalisée sous la forme d'un composant discret, la mémoire non volatile (204) sous la forme d'un autre composant discret et le microcontrôleur (206) sous la forme d'un composant discret supplémentaire.

**10.** Système de mémoire (230) comprenant la mémoire volatile (202) réalisée sous la forme d'un composant discret et la mémoire non volatile (204) réalisée sous la forme d'un autre composant discret ainsi qu'un dispositif de gestion de mémoire (234) selon l'une des revendications précédentes, lesquels sont disposés sur un élément porteur (235) commun, la première interface (236) du dispositif de gestion de mémoire (234) étant reliée à l'interface de mémoire (214) de la mémoire non volatile (204) et la deuxième interface (238) du dispositif de gestion de mémoire (234) étant reliée à l'interface de mémoire (208) de la mémoire volatile (202).

**11.** Système informatique (200) pour un véhicule, le système informatique (200) possédant un système de mémoire (230) selon la revendication 10 et le microcontrôleur (206), l'élément porteur (235) commun du système de mémoire (230) et du microcontrôleur (206) étant disposé sur un élément porteur supplémentaire (233), et une troisième interface (240) du dispositif de gestion de mémoire (234) étant reliée à l'interface (210) du microcontrôleur (206).

**12.** Système informatique (200) selon la revendication 11, comprenant une mémoire d'amorçage non volatile (122) destinée à mémoriser des données de commande destinées à réaliser l'opération d'amorçage du microcontrôleur (206), le microcontrôleur (206) étant configuré pour lire les données de commande depuis la mémoire d'amorçage (122) par le biais d'une interface d'amorçage afin de les utiliser pour réaliser l'opération d'amorçage chronologiquement en parallèle avec l'étape de lecture (662).

EP 3 218 812 B1

# Fig. 1

102 ▢

104 ▢

108 ⇕16 110    114 ⇕32 116

112 ▢ 118 ▢

120 ▭

122 ▢ 106

# Fig. 2

202    204    200

235

208 214 230

16  16  8  8

238 236

234 242

240

210 ⇕32

212

206 232 233

15

## Fig. 3

## Fig. 4

# Fig. 5

# Fig. 6

**Fig. 7**

**Fig. 8**

**IN DER BESCHREIBUNG AUFGEFÜHRTE DOKUMENTE**

**In der Beschreibung aufgeführte Patentdokumente**

- US 6513094 B1

- DE 102004013639 A1